# EUROPEAN PATENT SPECIFICATION

(11) **EP 2 009 081 B1**
(45) Date of publication and mention of the grant of the patent: **19.06.2013**
(21) Application number: 07720565.6
(22) Date of filing: 27.03.2007
(51) Int. Cl.: C10M 125/30, C10M 125/00, C10M 125/26, C10M 177/00

(54) **FORMULATION WHICH CREATES PROTECTION LAYERS ON THE METAL SURFACE AND METHOD FOR PREPARING THE SAME**
FORMULIERUNG, DIE SCHICHTZSCHICHTEN AUF DER METALLOBERFLÄCHE ERZEUGT, UND HERSTELLUNGSVERFAHREN DAFÜR
FORMULATION QUI FORME DES COUCHES DE PROTECTION À LA SURFACE D'UN MÉTAL ET PROCÉDÉ POUR PRÉPARER CETTE FORMULATION

(30) Priority: 20.04.2006 CN 200610075832
(43) Date of publication of application: 31.12.2008
(73) Proprietor: Jin, Yuansheng, Haidian District, Beijing 100-084 (CN)
(72) Inventor: YANG, He, Beijing 100084 (CN); JIN, Yuansheng, Beijing 100084 (CN)
(74) Representative: Hinkelmann, Klaus
(86) International application number: PCT/CN2007/000991
(87) International publication number: WO 2007/121656

(56) References cited:
- WO-A1-01/02520
- WO-A1-2004/109135
- CN-A- 1 391 059
- CN-A- 1 740 290
- CN-A- 1 919 954
- RU-C1- 2 093 719
- RU-C1- 2 169 172
- RU-C1- 2 179 270

## Description

### Technical Field

The present invention relates to a formulation which creates protection layers on metal surface and method for preparing the same.

### Background Art

It is always a hot spot in scientific field to reduce friction and improve anti-wear property since the reduction of friction loss would lead to stronger mechanical power and higher product efficiency. One of important ways for reducing friction loss and increasing product efficiency is to strengthen and rehabilitate the friction surface and worn surface of machine parts. At present, the friction surface of machine parts generally could be strengthened by the following three approaches: 1) strengthening the surface of parts by pre-treatment, including heat treatment strengthening methods such as carburizing, sulfurizing and carbonitriding, film-deposition techniques such as TiN film and DLC film, and mechanical strengthening methods such as shot peening and knurl; 2) surface repairing and regenerating techniques for the worn surface of machine parts, including thermal spraying, brush plating and other surface repairing and regenerating techniques; and 3) in-situ alloying the surfaces of friction pairs by using a lubricant as carrier to convey a formulation with special repairing function into the friction contact regions of machine parts wherein a mechno-chemical reaction (tribo-chemical reaction) among the formulation, the surfaces of friction pairs and third bodies such as wear debris occurs.

The above approaches 1) and 2) are off-line strengthening techniques and have some inherent disadvantages, such as complex procedure, long processing time and high cost. The approach 3) is currently a hot spot in the anti-wear field. However, the currently used products for the approach 3) are not stable in performance and thereby not being widely applied, since the phase structure and mechanical properties of the generated anti-wear layer are still unknown.

The document CN 1740290A discloses a nanometer vibration-reducing and noise-reducing self-repairing material, which is prepared with nanometer level metal powder and natural ore powder as main material and by adding several kinds of supplementary material and certain technological process, and which is added into lubricating oil or ultrasonic medium as high performance repair material. Thereby, the self-repairing nanometer material is composed of the self-repairing nanometer materials A and B, wherein material A comprises a dispersing medium and other auxiliary additives (e.g., antifriction agent, friction pairs cleaning dispersing agent and antioxidant) in addition to a natural ore nanopowder self-repair lubricant, a silane coupling agent and a metal nanopowder like nickel. The material A is used by being mixed with the material B to form a high hardness metallurgy bonding ferromagnesian silicate ceramic protective layer and to further reduce the friction coefficient of lubricating medium.

### Contents of the Invention

The present invention provides a formulation for generating on a frictional or worn metal surface a protective layer with a high hardness of cermets and an elastic modulus of high quality alloy steel to overcome the drawbacks of methods used in the current anti-wear and repairing fields, such as complex procedure, long processing time and high cost of the methods, as well as unknown phase structure and unstable mechanical performance of the anti-wear and repairing layers generated by the methods. The present invention further provides a method for preparing the formulation.

### Some embodiments of the present invention are as follows:

The present invention provides a formulation for generating a protective layer on a metal surface consisting of following components in weight parts:

| | |
|---|---|
| Lamellar hydroxyl silicate powder | 45-99; |
| Surface modifier | 1-50; |
| Catalyst for carbonization and graphitization | 0.05-6; |

wherein the surface modifier is a titanate coupling agent or a silane coupling agent, or a combination thereof; the catalyst for carbonization and graphitisation is one of elementary elements, oxides and chlorides of the group of elements consisting of Fe, Co, Ni, Ru, Rh, Pd, Os, Ir, and Pt, or combination thereof.

In a preferred embodiment, the above mentioned formulation consist of the following components in weight parts:

| | |
|---|---|
| Lamellar hydroxyl silicate powder | 60-99; |
| Surface modifier | 3-20; |
| Catalyst for carbonization and graphitization | 0.05-3; |

wherein the surface modifier is a titanate coupling agent or a silane coupling agent, or a combination thereof; the catalyst for carbonization and graphitisation is one of elementary elements, oxides and chlorides of the group of elements consisting of Fe, Co, Ni, Ru, Rh, Pd, Os, Ir, and Pt, or combination thereof.

In a further preferred embodiment, the above mentioned formulation consist of the following components in weight parts:

| | |
|---|---|
| Lamellar hydroxyl silicate powder | 75-99; |
| Surface modifier | 7-12; |
| Catalyst for carbonization and graphitization | 1-2; |

wherein the surface modifier is a titanate coupling agent or a silane coupling agent, or a combination thereof; the catalyst for carbonization and graphitisation is one of elementary elements, oxides and chlorides of the group of elements consisting of Fe, Co, Ni, Ru, Rh, Pd, Os, Ir, and Pt, or combination thereof.

The mentioned lamellar hydroxyl silicate powder is powder of magnesium silicate hydroxide ore.

The mentioned powder of magnesium silicate hydroxide ore is one of the powders of serpentine, talcum, sepiolite and actinolite ore, or a combination thereof.

The mentioned titanate coupling agent is NDZ-131 or NDZ-133 titanate coupling agent.

The mentioned silane coupling agent is HD-22 silane coupling agent.

NDZ-131 and NDZ-133 are two titanate coupling agents produced by Tsingdao Haida Chemistry Co., Ltd, and both are mono-alkoxy fatty-acid titanate coupling agents. HD-22 is a trade name of a silane coupling agent, and is also produced by Tsingdao Haida Chemistry Co., Ltd.

The oxides and chlorides of the Group VIIIA elements can be purchased from Shanghai Jiushan Chemistry Co., Ltd.

The formulation for generating a protective layer on a metal surface can be used for repairing and protecting metal surface of an iron-containing material.

The present invention further provides a method for preparing the formulation, comprising the following steps:
1) Grinding a powder of natural magnesium silicate hydroxide ore with a surface modifier to form an oil-dispersible composite powder with particles of nanometer to micrometer grade;
2) Adding a catalyst for carbonization and graphitization and continuously grinding to form a formulation in form of uniform powder.

The present invention also provides a lubricant containing the formulation.

The present invention further provides a method of using the formulation, comprising: directly adding the formulation in form of uniform powder in a mass ratio of 0.1-5‰ to a lubricant.

In a preferred embodiment, the method of using the formulation comprises admixing the formulation in form of uniform powder in a mass ratio of 0.1-5% to a basic lubricant to form a concentrate, and directly adding the concentrate to a lubricant in a proportion of the concentrate : the lubricant = 1: 9.

The lubricant is a lubricating oil or grease.

The basic lubricant is a colorless and transparent basic oil of trademark 100N or 150N, a lithium-based grease, or a calcium-based grease.

The formulation can be used by the following specific methods:
Method 1), comprising: dissolving the formulation in form of uniform powder in a mass ratio of 0.1-5% into a colorless and transparent basic oil of trademark 100N or 150N to form a concentrate, and directly adding the concentrate to a lubricant in proportion of the concentrate : the lubricant = 1: 9.
Method 2), comprising: blending the formulation in form of uniform powder in a mass ratio of 0.1-5% with a lithium-based grease or a calcium-based grease and stirring uniformly to form a concentrate, and directly adding the concentrate to a lubricating grease in proportion of the concentrate : the lubricating grease =1:9.

### The technical effects of the present invention are shown as follows.

The formulation for generating a protective layer on a frictional and worn metal surface according to the present invention can in-situ form a nanometer crystal layer for antifriction and wear-resistance on the frictional and worn metal surface, in which the protective layer possesses both a high surface hardness of cermets and an elastic modulus of high quality alloy steel. When the formulation is applied to newly-made parts, a desired surface with excellent mechanical properties would be obtained and thus the service life of the parts would be prolonged greatly. When the formulation is applied to working friction pairs, it would in situ repair the worn surfaces, optimize gaps, recover the designed dimension of parts, prolong the service life of machine, and lower maintenance cost.

### Brief Description of the Drawings

Fig.1: Photos of (a) test specimen assembly on Falex Tribotester, and (b) the test specimen's draft;
Fig.2: Protective layer formed on 45^{#} steel substrate;
Fig.3: Protective layer formed on cast iron substrate;
Fig.4: XPS survey spectrum of element distribution of protective layer;
Fig.5: XPS fine spectrum analyses of element distribution of protective layer;
Fig.6: HRTEM image of the entire crystal system of protective layer;
Fig.7: AFM image and depth curve of nano-hardness indentation on 45^{#} steel protective layer;
Fig.8: AFM image and depth curve of nano-hardness indentation on 45^{#} steel substrate;
Fig.9: Curve of friction coefficient under boundary lubrication;
Fig. 10: Principle sketch of the constructed bearing tester;
Fig.11: Surface topographys of 45^{#} steel shaft specimen before and after bearing test;
Fig.12: SEM image of cross section of 45^{#} steel shaft specimen after bearing test;
Fig.13: EDX spectrum of protective layer on 45^{#} steel specimen after bearing test;
Fig.14: SEM images of 45^{#} steel surfaces without (a) and with (b) protective layer after abrasive test;
Fig.15: Carrying capacity curves of friction pairs with and without protective layer on 45^{#} steel surface;
Fig.16: SEM images of 45^{#} steel surfaces without (a) and with (b) protective layer after seizure resistance test;
Fig.17: SEM image of cross section of lower specimen after Falex test in Example 4;
Fig.18: EDX results of substrate (a) and protective layer (b) in Example 4;
Fig.19: SEM image of cross section of lower specimen after Falex test in Example 5;
Fig.20: SEM image of cross section of lower specimen after Falex test in Example 6.

### Specific Models for Carrying Out the Present Invention

The action mechanism of the formulation for generating a protective layer on a metal surface is as follows.

### 1) Oxidative mechanical polishing

During a frictional process, the powder of natural lamellar hydroxyl silicate ore as the main component of the formulation is readily cleaved and broken, and releases hydroxyl group and O²⁻ to form active free water. The third body particles generated by cleaving and breaking the powder mechanically polish the friction surfaces, and the active O²⁻ and free water oxidize surface asperities to generate metal oxides/metal bonds far weaker than metal bonds thereby performing oxidative polishing to the frictional surfaces. Thus, the oxidative mechanical polishing is the first action to form a nanometer protective layer on the surfaces of friction pairs. Serpentine with Mg₆Si₄O₁₀(OH)₈ as main component is used as an example and its action process is shown as follows.

Mg₆Si₄O₁₀(OH)₈ → 6Mg²⁺ + 4SiO₂ + 4H₂O + 6O²⁻

Fe⁰, Feⁿ⁺ (EEE) +O²⁻ → FeₓO_{y}

Fe⁰, Feⁿ⁺ (EEE) + H₂O + O₂ → Feₓ(OH)_{y}

Fe⁰ (primary surface);

Feⁿ⁺ (EEE) (Exo-electron emission surface)

### 2) Lubricant catalyzing carbonization and graphitization

In the friction system containing auto-repairing formulation, iron-based metal friction pairs and the auto-repairing components in lubricant provide a site and catalysis species for carbonization and graphitization of lubricant basic oil. The components include the elements for constituting the most active catalyst for acid/alkali catalytic reactions, and the elements for constituting the most active catalyst for redox reactions. Thus, the lubricant containing auto-repairing formulation has a higher extent of carbonization than akin lubricants, and can generate a large amount of nanometer carbonaceous particles with high activity. The highly active nanometer carbonaceous particles in the oil phase react with ferrites to form Fe₃C phase and graphite particles. Therefore, the carbonization and graphitization of lubricant are the second action mechanism for generating nanometer crystal protective layer on the surfaces of friction pairs. The process of this mechanism is illustrated as follows.

Fe₂O₃ + C → Fe + CO·CO₂

Fe + C → Fe₃C

Fe₃C → Fe↑+ C (easy graphitization) → graphite

### 3) Mechanical alloying

After the oxidative mechanical polishing and the carbonization of lubrication, the fresh metal surface with high chemical activity and the oil phase containing a large amount of nanometer iron oxides, iron carbides and carbonaceous particles constitute a reaction system for the generation of a repairing and protective layer. The energy released during the friction generates electric field and weak magnetic field on the surfaces of friction pairs, which allow the enriching of the particles in the oil on the surfaces, firstly the aggregation in the surface valley. The movement of surface asperities caused by the relative motion of friction pairs generates shear and pressing stresses on these particles and induces the mechanical alloying thereof. The continue collision of surface asperities renders the surface asperities unstable and also results in the mechanical alloying of the surface asperities. In addition, the nanometer crystal structure layer generated in the valley by mechanical alloying continuously grows to even and repair the surface until the valley are fully filled up and then grows on the whole friction surface to form a repairing and protective layer, thereby achieving the repairing. Thus, the mechanical alloying is the third and final action mechanism for generating nanometer crystal protective layer on the surface of friction pairs.

### Elements, phase structures and mechanical properties of nanometer crystal protective layer

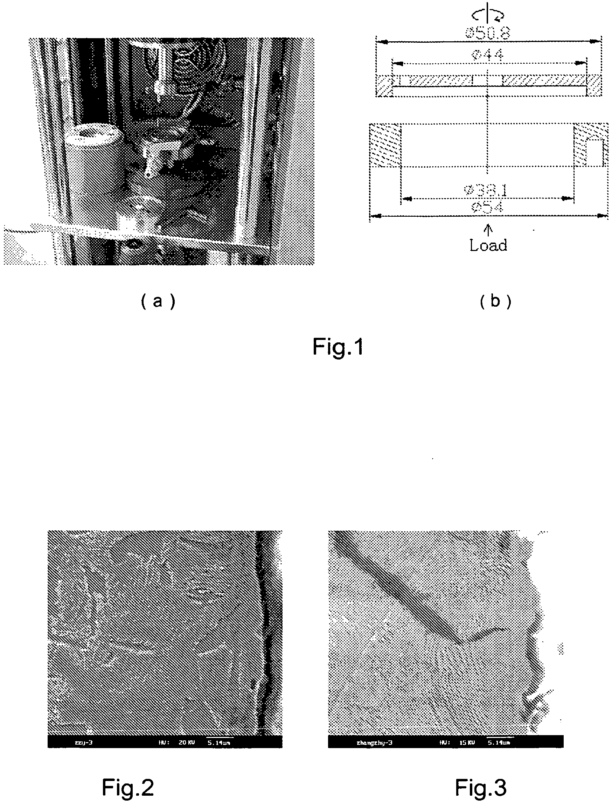

Falex-1506 Tribotester (Falex Company, USA) and test specimens in ring/ring plane contact manner are used. Fig. 1 gives a photo of the test specimen assembly on Falex Tribotester and a specimen's draft showing the dimensions of the specimens. The contact area between the upper and lower specimens is 506 mm². The test load is ranged from 0.1MPa to 0.44MPa, and the average linear speed is 1-7m/s.

Fig.2 and Fig.3 show the protective layers generated on 45^{#} steel and cast iron substrates subjected to Falex testing for 400 and 80 hours, respectively. The main components of the repairing formulation are powders of serpentine (Mg₆Si₄O₁₀(OH)₈) and sepiolite (Mg₈Si₁₂O₃₀(OH)₄(OH₂)₄·8H₂O). The used lubricant is a blend of API SD/CC SAE 15W-40 engine oil containing the repairing formulation, the amount of the repairing formulation is 5wt‰, and oil-immerging lubrication is adopted.

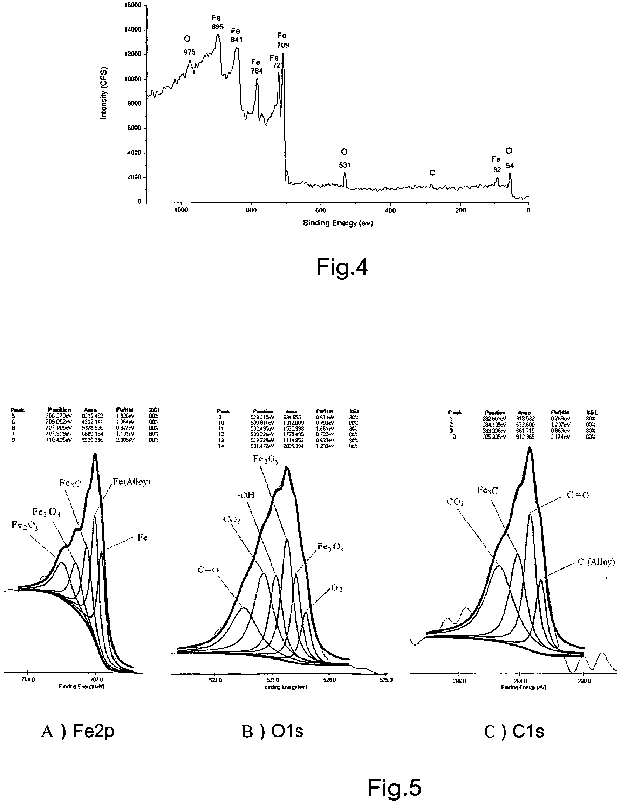

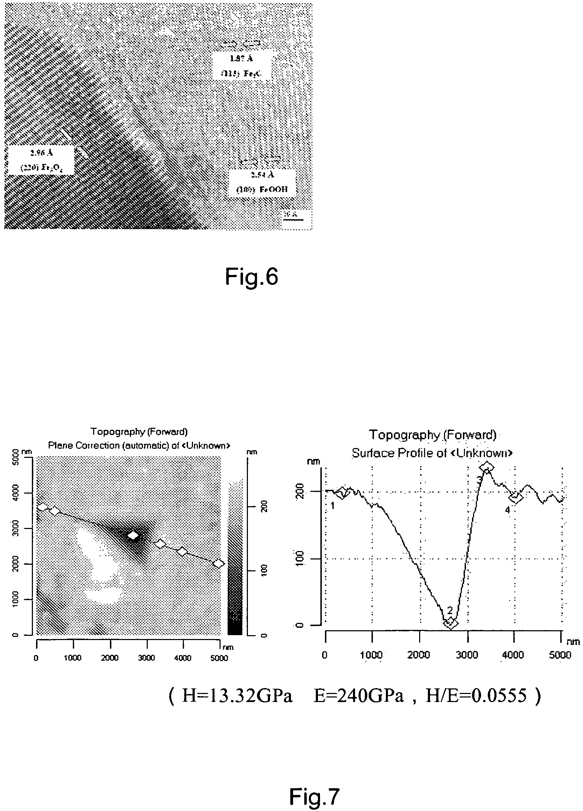

The X-ray photoelectron spectroscopy (XPS) analyses of the protective layer, as shown in Fig. 4, indicate that Fe, C and O are the main elements constituting the protective layer. From the XPS fine spectrum analyses of the protective layers, as shown in Fig.5, the valence states of elements indicate that these three elements mainly exist in the forms of Fe₃C, Fe₃O₄, Fe₂O₃, as well as -OH and other Fe, C alloys. Fig.6 displays the high-resolution transmission electron microscopy (HRTEM) image of the intact crystal system in the protective layer, from which three kinds of nanometer crystals, i.e., Fe₃C, Fe₃O₄ and FeOOH, could be clearly discerned.

Table 1 shows the comparison of surface micro-hardness of the 45^{#} steel lower specimen before and after testing, and Table 2 shows the comparison of cross section nano-hardness between the substrate and the protective layer of the 45^{#} steel lower specimen. It can be seen that the surface micro-hardness and the cross section nano-hardness of the protective layer are greatly elevated by 2.6 times of the surface hardness of 45^{#} steel and 3.6 times of the substrate hardness of 45^{#} steel, respectively.

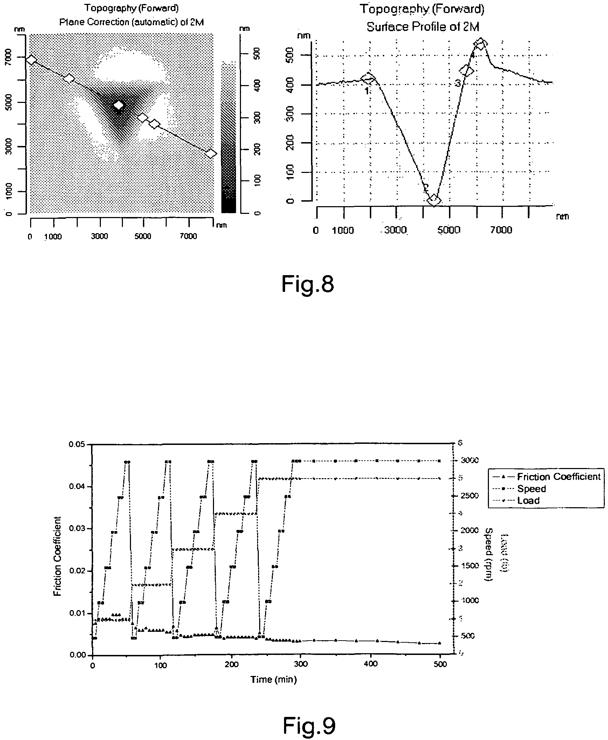

The AFM images and the depth curves of the representative nano-hardness indentations on the protective layer and the 45^{#} steel substrate are shown in Fig.7 and Fig.8. The values of hardness and elastic modulus of the protective layer are H = 13.32GPa and E = 240Gpa, respectively, and the H/E ratio is about 0.0555, demonstrating that the protective layer has a high "ceramic" hardness and still retains the elastic modulus of super alloy steel.

All used lubricant is drained out from the oil cup after 80 hours of the Falex test to allow the lower and upper specimens under boundary lubricating condition. Falex test is then restarted according to the standard schedule and the change of friction coefficient is recorded. The curve of the recorded friction coefficients as shown in Fig.9 indicates that the friction coefficient keeps always below 0.005 after the running-in period in which the load and speed increase gradually. This demonstrates that the nanometer crystal protective layer possesses a super lubricity.

**Table 1: Comparison of surface micro-hardness of 45^{#} steel lower specimen before and after Falex test**

| Measurement positions | | 1 | 2 | 3 | 4 | 5 | 6 | 7 | 8 | Average |
|---|---|---|---|---|---|---|---|---|---|---|
| Micro-hardness Hv_{100g} | Before test | 234 | 290 | 301 | 299 | 290 | 321 | 331 | 321 | 298 |
| | After test | 970 | 707 | 757 | 734 | 748 | 720 | 864 | 738 | 780 |

**Table 2: Comparison of nano-hardness between the protective layer and the substrate of 45^{#} steel lower specimen after Falex test**

| Measurement positions | | 1 | 2 | 3 | 4 | Average |
|---|---|---|---|---|---|---|
| Nano-hardness HV_{20mN} | Substrate | 353.30 | 321.20 | 338.18 | 387.44 | 350.03 |
| | Protective layer | 1177.06 | 1389.45 | 1383.45 | 1149.85 | 1274.95 |

### Anti-abrasion and anti-seizure properties of the protective layer

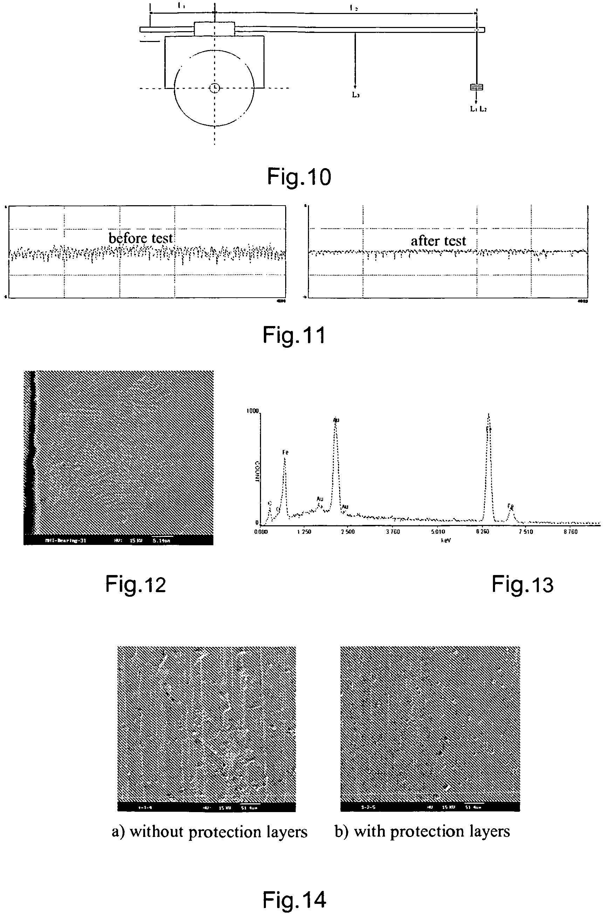

The test for confirming the generation of protective layer and its anti-abrasion and anti-seizure properties was conducted on a simulated test rig of Journal Bearing of Horizontal Shaft Type Pump. The shaft specimen and the bearing specimen were made of 45^{#} steel and Babbitt alloy, respectively. The principle sketch of the constructed bearing tester is shown in Fig.10. The lever ratio is 1:10, L₁ stands for load weight, and the dead weight of lever and weight pallet is: L₂ + L₃ = 0.912kg. The surface roughness of the bearing specimen is Ra = 0.3692µm, the thickness of alloy layer is 2mm, and the bearing diameter and width are 120mm and 10mm, respectively. The surface roughness of the shaft specimen is Ra = 0.5359µm, and the shaft diameter and width are 120 mm and 15 mm, respectively. The lubricant is a blend of API SD/CC SAE 15W-40 engine oil containing the repairing formulation. The main components of the repairing formulation are powders of serpentine (Mg₆Si₄O₁₀(OH)₈) and sepiolite (Mg₈Si₁₂O₃₀(OH)₄(OH₂)₄·8H₂O). The amount of the repairing formulation is 5wt‰, and the oil-immerging lubrication manner is adopted. The test parameters are listed in Table 3.

**Table 3: Bearing simulation test parameters**

| Test Period | Running in | Normal test |
|---|---|---|
| Normal Load on bearing surface (N) | 18.74 | 38.34 |
| Average bearing pressure (MPa) | 0.33 | 0.70 |
| Rotation speed (rpm) | 1800 | 1800 |
| Average line speed (m/sec) | 11.3 | 11.3 |
| Temperature (°C) | Room | Room |
| Test Time (h) | 3 | 24 |

### 1) Surface topography and SEM of the protective layer

After friction test, the average surface roughness of 45^{#} steel shaft is Ra = 0.3859µm, less than the original surface roughness Ra = 0.5359µm. Similarly, the average surface roughness of the bearing is Ra = 0.2605µm, less than the original surface roughness Ra = 0.3692µm. Fig.11 shows the typical 2D surface topography images of the shaft specimen before and after test.

Fig.12 shows the SEM secondary electronic image of the cross section of 45^{#} steel shaft after a 27-hour bearing test. It is clearly seen that the protective layer of about 2µm thickness has been formed on the friction surface of 45^{#} steel, in which the protective layer grows along the pearlite skeleton of substrate and adheres closely to the substrate without a clearly distinguishable physical boundary. Fig.13 shows the EDX spectra of the protective layer, which clearly indicates that the protective layer consists of three elements, i.e., Fe, C and O. The C content in the protective layer is much higher than that in 45^{#} steel due to the generation of C element by pyrolysis of carrier oil in lubricant. The O content in the protective layer is also very high which is derived from the cleavage fracture of serpentine (Mg₆Si₄O₁₀(OH)₈) and talc (Mg₃(Si₄O₁₀)(OH)₂).

### 2) Anti-abrasion property of the protective layer

400mg 100∼125µm corundum (Al₂O₃) powder is admixed with 3.3g SiC abrasive paste (trademark is W.15, and the SiC particle size is 1∼1.5µm) to obtain an abrasive material. The abrasive material is added into SD/CC SAE 15W-40 oil without the repairing formulation, and the anti-abrasion test is conducted on the simulated bearing test rig. The test load is W = 38.34N; the average surface pressure is P = 0.70MPa; the rotation speed is n = 2100 rpm; the total test time is Tt = 4.5 hours; and the oil-immerging lubrication is adopted. Fig.14 gives the SEM secondary electronic images of 45^{#} steel shaft surfaces after the anti-abrasion test, in which a) is the image of the shaft surface without the protective layer, and b) is the image of the shaft surface with the protective layer. Obviously, the shaft surface without the protective layer exhibits much severe defeature than the shaft surface with the protective layer. The wear scar depths measured by Talysurf-5 Profilometer indicate that the depths of abrasive wear scars on the surface without and with the protective layer are 46.59µm and 15.01µm, respectively. The wear volume of the former is three times larger than that of the later.

### 3) Anti-seizure property of the protective layer

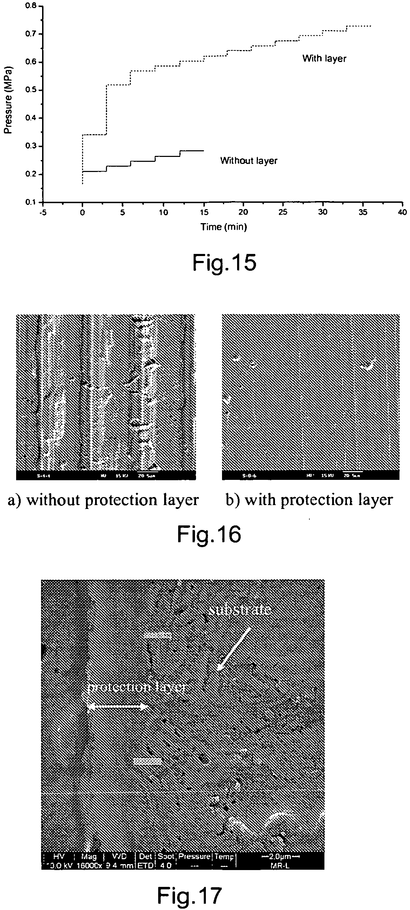

The anti-seizure test is conducted on the simulated bearing test rig. API SD/CC SAE 15W-40 engine oil without the repairing formulation is used under oil starvation condition. After running-in, the test conditions are kept, and the load is gradually increased step by step per 3 minutes until seizure occurs. Fig. 15 shows the carrying capacity curves of friction pairs with and without protective layer until seizure occurring. Obviously, the seizure resistance of the friction pairs with the protective layer is about 2.5 times higher than that without the layer. Fig. 16 gives the SEM secondary electronic images of 45^{#} steel shaft surfaces after the anti-seizure test, in which a) is the image of the shaft surface without the protective layer, and b) is the image of the shaft surface with the protective layer. Obviously, the shaft surface without the protective layer exhibits much severe defeature than the shaft surface with the protective layer.

### Example 1:

The formulation used in Example 1 is as follows (weight parts):

| | |
|---|---|
| Serpentine (Mg₆Si₄O₁₀(OH)₈) | 99; |
| NDZ-131 mono-alkoxy fatty-acid titanate coupling agent | 12; |
| Nanometer Ni catalyst for carbonization and graphitization | 1; |
| Nanometer Co catalyst for carbonization and graphitization | 1. |

Serpentine and NDZ-131 mono-alkoxy fatty-acid titanate coupling agent were ground together in a high-energy ball mill (XQM2 type Planetary High-Energy Ball Mill) for 10 hours at 800rpm until the particle-diameter was between 10nm and 1µm. Then the powdery nanometer Ni and Co catalysts for carbonization and graphitization (produced by Gaosida Nanometer Material Apparatus Co., Ltd., Siping City, Jilin Province) were added and continuously ground for 30min to obtain a formulation with auto-repairing function useful in lubricants.

The obtained formulation was added in a mass ratio of 0.5‰ to a lubricant (ZZT-Kinetic Oil (Miaomei), Bolingaoke (Beijing) Petrochemical Co., Ltd.), and the obtained lubricant was compared with a SF level gasoline engine oil in a Jetta automotive engine in terms of fuel consumption and emission. The conditions were as follows.
1. Test car: 4 cylinders engine with a displacement of 1.6L equipped with ternary catalyst; the cylinder pressure was about 8.2 after over 130,000 kilometer driving.
2. Basic data of fuel consumption and emission were obtained after the car loading with the SF level gasoline engine oil ran for 200km strictly in accordance with test specification; the cylinder pressure has never been improved.
3. After replacing the SF level gasoline engine oil with ZZT-Kinetic Oil (Miaomei) lubricant containing the formulation, the following comparative data was collected over 2000 km driving period:
1) The cylinder pressure was recovered to the original level of 12;
2) Energy saving data: the overall fuel saving rates were: 3.1% (urban district at a speed of 30-50km/h); 3.3% (intercity at a speed of 70-90km/h); and 3.7% (express way at a speed of about 110 km/h).
3) Emission data:

| | SF level gasoline engine oil | ZZT-Kinetic Oil (Miaomei) lubricant |
|---|---|---|
| HC + NOx | 0.180 | 0.138 |
| CO | 0.74 | 0.563 |

### Example 2:

The formulation used in Example 2 is as follows (weight parts):

| | |
|---|---|
| Serpentine (Mg₆Si₄O₁₀(OH)₈) | 50; |
| Talc (Mg₃(Si₄O₁₀)(OH)₂) | 25 |
| NDZ-133 mono-alkoxy fatty-acid titanate coupling agent | 12; |
| Nanometer PdO catalyst for carbonization and graphitization | 0.5; |
| Nanometer Pt catalyst for carbonization and graphitization | 0.5. |

Serpentine and talc particles and NDZ-133 mono-alkoxy fatty-acid titanate coupling agent were ground together in a high-energy ball mill for 10 hours at 800rpm until the particle-diameter was between 10nm and 1 µm. Then powdery nanometer PdO and Pt catalysts for carbonization and graphitization were added and continuously ground for 30min to obtain a formulation with auto-repairing function useful in lubricants.

The obtained formulation was added in a mass ratio of 1‰ to API SD/CC SAE 15W-40 engine oil. The test was conducted on a simulated test rig of Journal Bearing of Horizontal Shaft Type Pump. The shaft specimen and the bearing specimen were made of 45^{#} steel and Babbitt alloy respectively. The principle sketch of the constructed bearing tester is shown in Fig.10. Fig.12 shows the SEM secondary electronic image of the cross section of 45^{#} steel shaft after a 27-hour bearing test. It is clearly seen that the protective layer of about 2µm thickness has been formed which grows along the pearlite skeleton of substrate and adheres closely to the substrate without a clearly distinguishable physical boundary. Fig.13 shows the EDX spectra of the protective layer indicating that the layer consists of Fe, C and O elements. The protective layer exhibits excellent anti-abrasion and anti-seizure properties as shown in Fig.14-16.

### Example 3:

The formulation used in Example 3 is as follows (weight parts):

| | |
|---|---|
| Serpentine (Mg₆Si₄O₁₀(OH)₈) | 70; |
| Sepiolite (Mg₈Si₁₂O₃₀(OH)₄(OH₂)₄·8H₂O) | 29 |
| HD-22 silane coupling agent | 7; |
| RhCl₃ catalyst for carbonization and graphitization | 1; |
| RuO₂ catalyst for carbonization and graphitization | 1. |

Serpentine and sepiolite particles and HD-22 silane coupling agent were ground together in a high-energy ball mill for 10 hours at 800rpm, until the particle-diameter was between 10nm and 1µm. Then powdery RhCl₃ and RuO₂ catalyst for carbonization and graphitization were added and continuously ground for 30min to obtain a formulation with auto-repairing function useful in lubricants.

The obtained formulation was admixed in a mass ratio of 5‰ to API SD/CC SAE 15W-40 engine oil. The surface contact friction test was conducted on a Falex Tribotester. 45^{#} steel and cast iron were used as materials for two specimens, and oil-immerging lubrication was adopted. The test time for 45^{#} frication pairs was 400 hours, and the test time for the cast iron was 80 hours. SEM results confirmed that protective layers were formed on both 45^{#} steel and cast iron specimens as shown in Fig.2 and Fig.3, respectively. The protective layers were further analyzed by XPS, nano-indentor, AFM, and HRTEM. The results indicated that the protective layer was constituted with three elements: Fe, C and O, which mainly existed in forms of Fe₃C, Fe₃O₄, Fe₂O₃, as well as -OH and other alloy forms of Fe and C and formed nanometer crystal system as shown in Figs.4, 5 and 6. The protective layer exhibits a high "ceramic" hardness and still retains the elastic properties of super alloy steel as well as excellent tribological property of superlubricity, as shown in Figs.7, 8 and 9.

### Example 4:

The formulation used in Example 4 is as follows (weight parts):

| | |
|---|---|
| Serpentine (Mg₆Si₄O₁₀(OH)₈) | 50; |
| Actinolite (Ca₂(Mg, Fe)₅Si₈O₂₂(OH)₂) | 25 |
| HD-22 silane coupling agent | 7; |
| Nanometer Ni catalyst for carbonization and graphitization | 1; |
| Nanometer Fe catalyst for carbonization and graphitization | 1. |

Serpentine and actinolite particles and HD-22 silane coupling agent were ground together in a high-energy ball mill for 10 hours at 800rpm, until the particle-diameter was between 10nm and 1µm. Then powdery Ni and Fe catalysts for carbonization and graphitization were added and continuously ground for 30min to obtain a formulation with auto-repairing function useful in lubricants.

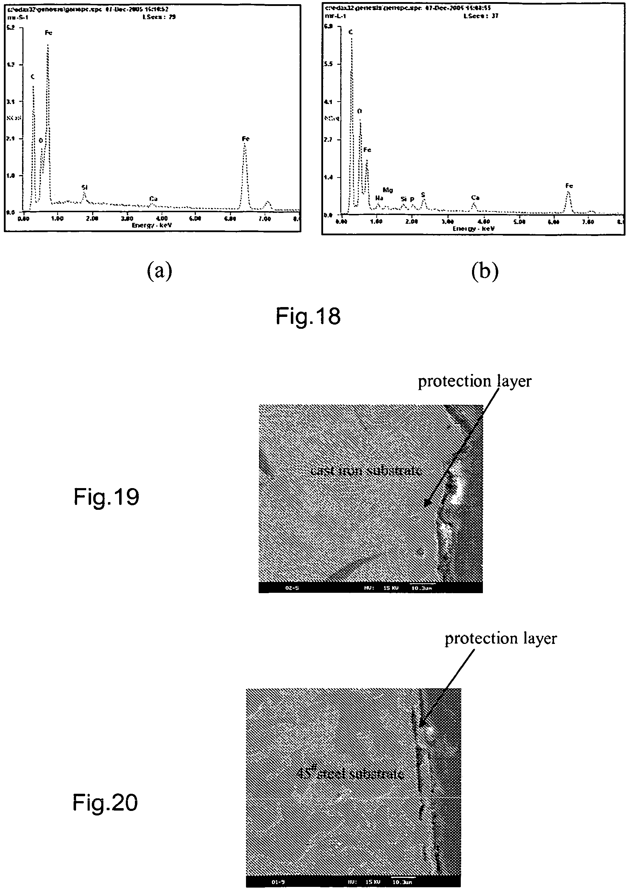

The obtained formulation was added in a mass ratio of 3‰ to API SD/CC SAE 15W-40 engine oil. The surface contact friction test was conducted on a Falex Tribotester. The test specimen was of cast iron, and oil-immerging lubrication was adopted. The test was performed for 4 cycles, 24-hour for each cycle, i.e., totaling 96 hours. Fig.17 is SEM image of the cross section of the lower specimen after Falex test, which shows that the protective layer is about 2-3µm thick on the substrate surface with a microstructure quite different from the substrate. Fig.18 gives the EDX spectra of the protective layer and the cast iron substrate, which indicate that the element distribution of the protective layer characterizes in a significant increase of both C content and O content in comparison with the substrate. The Fe/C of substrate is 0.43 in comparison with 0.14 in the protective layer.

### Example 5:

The formulation used in Example 5 is as follows (weight parts):

| | |
|---|---|
| Serpentine (Mg₆Si₄O₁₀(OH)₈) | 75; |
| NDZ-133 mono-alkoxy fatty-acid titanate coupling agent | 6; |
| NDZ-131 mono-alkoxy fatty-acid titanate coupling agent | 6; |
| IrO₂ catalyst for carbonization and graphitization | 2. |

Serpentine particles and NDZ-133 and NDZ-131 coupling agents were ground together in a high-energy ball mill for 10 hours at 800rpm, until the particle-diameter was between 10nm and 1µm. Then powdery IrO₂ catalyst for carbonization and graphitization were added and continuously ground for 30min to obtain a formulation with auto-repairing function useful in lubricants.

The obtained formulation was added in a mass ratio of 5‰ to API SD/CC SAE 15W-40 engine oil, and the surface contact friction test was conducted on a Falex Tribotester. The test specimen was of cast iron, and oil-immerging lubrication was adopted. The test was performed for 7 cycles, 24 hours for each cycle, totaling 148 hours. Fig.19 is the SEM of the cross section of the lower specimen, which shows that the protective layer of about 3µm thickness formed on the specimen surface. The average nano-hardness values of the cast iron substrate and the protective layer were Hv_{20mN} = 572 and Hv_{20mN} = 1158, respectively.

### Example 6:

The formulation used in Example 6 is as follows (weight parts):

| | |
|---|---|
| Talc (Mg₃(Si₄O₁₀)(OH)₂) | 99; |
| HD-22 silane coupling agent | 10; |
| NDZ-131 mono-alkoxy fatty-acid titanate coupling agent | 10; |
| RuCl catalyst for graphitization | 3. |

Talc particles and HD-22 and NDZ-131 coupling agents were ground together in a high-energy ball mill for 10 hours at 800rpm, until the particle-diameter was between 10nm and 1µm. Then powdery RuCl catalyst for graphitization was added and continuously ground for 30min to obtain a formulation with auto-repairing function useful in lubricants.

The obtained formulation was added in a mass ratio of 3.5‰ to API SD/CC SAE 15W-40 engine oil, and the surface contact friction test was conducted on a Falex Tribotester. The test specimen was of 45^{#} steel, and oil-immerging lubrication was adopted. The test was performed for 6 cycles, 24 hours for each cycle, totaling 144 hours. Fig.20 is the SEM image of the cross section of the lower specimen, which shows that the protective layer of about 2µm thickness was formed on the surface. The surface miro-hardness of the lower specimen was increased from the original level of Hv_{100g} = 298 to a level of Hv_{100g} = 785 after the Falex test.

### Example 7:

The formulation used in Example 7 is as follows (weight parts):

| | |
|---|---|
| Sepiolite (Mg₈Si₁₂O₃₀(OH)₄(OH₂)₄·8H₂O) | 60; |
| NDZ-131 mono-alkoxy fatty-acid titanate coupling agent | 3; |
| Nanometer Ni catalyst for carbonization and graphitization | 0.025; |
| Nanometer Co catalyst for carbonization and graphitization | 0.025. |

Sepiolite particles and NDZ-131 coupling agent were ground together in a high-energy ball mill for 10 hours at 800rpm, until the particle-diameter was between 10nm and 1µm. Then powdery Ni and Co catalysts for carbonization and graphitization were added and continuously ground for 30min to obtain a formulation with auto-repairing function useful in lubricants.

The obtained formulation was added in a mass ratio of 5‰ to API SD/CC SAE 15W-40 engine oil, and the surface contact friction test was conducted on a Falex Tribotester. The test specimen was of 45^{#} steel, and oil-immerging lubrication was adopted. The test was performed for 4 cycles, 24 hours for each cycle, totaling 96 hours. The surface micro-hardness of the lower specimen was increased from the original level of Hv_{100g} = 275 to a level of Hv_{100g} = 750 after the Falex test. The SEM image of the cross section of the lower specimen shows that the protective layer is about 0.5-1µm thick on the surface.

### Example 8:

The formulation used in the Example 8 is as follows (weight parts):

| | |
|---|---|
| Actinolite (Ca₂(Mg, Fe)₅Si₈O₂₂(OH)₂) | 60 |
| HD-22 silane coupling agent | 20; |
| Nanometer Fe catalyst for carbonization and graphitization | 3. |

Actinolite particles and HD-22 silane coupling agent were ground together in a high-energy ball mill for 10 hours at 800rpm, until the particle-diameter was between 10nm and 1µm. Then powdery Fe catalyst for carbonization and graphitization was added and continuously ground for 30min to obtain a formulation with auto-repairing function useful in lubricants.

The obtained formulation was added in a mass ratio of 4‰ to API SD/CC SAE 15W-40 engine oil, and the surface contact friction test was conducted on a Falex Tribotester. The test specimen was of 45^{#} steel adopting immerging lubrication. The test was performed for 4 cycles, 24 hours for each cycle, totaling 96 hours. The SEM image of the cross section of the lower specimen shows that the protective layer is about 1µm thick on the surface. The surface micro-hardness of the lower specimen was increased from the original level of Hv_{100g} = 298 to a level of Hv_{100g} = 780 after the Falex test.

### Example 9:

The formulation used in Example 9 is as follows (weight parts):

| | |
|---|---|
| Serpentine (Mg₆Si₄O₁₀(OH)₈) | 50; |
| Talc (Mg₃(Si₄O₁₀)(OH)₂ | 49 |
| NDZ-133 mono-alkoxy fatty-acid titanate coupling agent | 50; |
| Nanometer Ni catalyst for carbonization and graphitization | 1.5; |
| RuO₂ compound catalyst for carbonization and graphitization | 1.5; |

Serpentine and talc particles and NDZ-133 coupling agent were ground together in a high-energy ball mill for 10 hours at 800rpm, until the particle-diameter was between 10nm and 1µm. Then powdery nanometer Ni and RuO₂ catalysts for carbonization and graphitization were added and continuously ground for 30min to obtain a formulation with auto-repairing function useful in lubricants.

The obtained formulation was added in a mass ratio of 3.5‰ to API SD/CC SAE 15W-40 engine oil, and the surface contact friction test was conducted on a Falex Tribotester. The test specimen was of 45^{#} steel adopting immerging lubrication. The test was performed for 4 cycles, 24 hours for each cycle, totaling 96 hours. The SEM of the cross section of lower specimen shows that the protective layer is about 1µm thick on the surface. The surface micro-hardness of the lower specimen was increased from the original level of Hv_{100g} = 275 to Hv_{100g} = 710 after the Falex test.

### Example 10:

The formulation used in Example 10 is as follows (weight parts):

| | |
|---|---|
| Serpentine (Mg₆Si₄O₁₀(OH)₈) | 35; |
| Sepiolite (Mg₈Si₁₂O₃₀(OH)₄(OH₂)₄·8H₂O) | 10 |
| HD-22 silane coupling agent | 1; |
| RhCl₃ catalyst for carbonization and graphitization | 0.025; |
| RuO₂ catalyst for carbonization and graphitization | 0.025. |

Serpentine and sepiolite particles and HD-22 silane coupling agent were ground together in a high-energy ball mill for 10 hours at 800rpm, until the particle-diameter was between 10nm and 1µm. Then powdery RhCl₃ and RuO₂ catalyst for carbonization and graphitization were added and continuously ground for 30min to obtain a formulation with auto-repairing function useful in lubricants.

The obtained formulation was added in a mass ratio of 5‰ to API SD/CC SAE 15W-40 engine oil, and the surface contact friction test was conducted on a Falex Tribotester. The test specimen was of 45^{#} steel adopting immerging lubrication. The test was performed for 5 cycles, 24 hours for each cycle, totaling 120 hours. The SEM image of the cross section of the lower specimen shows that the protective layer is about 1µm thick on the surface. The surface micro-hardness of the lower specimen was increased from the original level of Hv_{100g} = 256 to a level of Hv_{100g} = 720 after the Falex test.

### Example 11:

The formulation used in Example 11 is as follows (weight parts):

| | |
|---|---|
| Serpentine (Mg₆Si₄O₁₀(OH)₈) | 40; |
| Talc (Mg₃(Si₄O₁₀)(OH)₂ | 20 |
| NDZ-133 mono-alkoxy fatty-acid titanate coupling agent | 20; |
| Nanometer Ni catalyst for carbonization and graphitization | 0.025; |
| IrCl₃ compound catalyst for carbonization and graphitization | 0.025. |

Serpentine and talc particles and NDZ-133 coupling agent were ground together in a high-energy ball mill for 10 hours at 800rpm, until the particle-diameter was between 10nm and 1µm. Then powdery Nanometer Ni and IrCl₃ catalysts for carbonization and graphitization were added and continuously ground for 30min to obtain a formulation with auto-repairing function useful in lubricants.

The obtained formulation was add in a mass ratio of 3.5‰ to API SD/CC SAE 15W-40 engine oil, and the surface contact friction test was conducted on a Falex Tribotester. The test specimen was of 45^{#} steel adopting immerging lubrication. The test was performed for 4 cycles, 24 hours for each cycle, totaling 96 hours. The SEM image of the cross section of the lower specimen shows that the protective layer is about 1µm thick on the surface. The surface micro-hardness of the lower specimen was increased from the original level of Hv_{100g} = 245 to Hv_{100g} = 685 after the Falex test.

### Example 12:

The formulation used in Example 12 is as follows (weight parts):

| | |
|---|---|
| Serpentine (Mg₆Si₄O₁₀(OH)₈) | 45; |
| NDZ-133 mono-alkoxy fatty-acid titanate coupling agent | 25; |
| NDZ-131 mono-alkoxy fatty-acid titanate coupling agent | 25; |
| Nanometer Ni catalyst for carbonization and graphitization | 6. |

Serpentine particles and NDZ-133 and NDZ-131 coupling agents were ground together in a high-energy ball mill for 10 hours at 800rpm, until the particle-diameter was between 10nm and 1µm. Then powdery nanometer Ni catalyst for carbonization and graphitization was added and continuously ground for 30min to obtain a formulation with auto-repairing function useful in lubricants.

The obtained formulation was added in a mass ratio of 5‰ to API SD/CC SAE 15W-40 engine oil, and the surface contact friction test was conducted on a Falex Tribotester. The test specimen was of 45^{#} steel adopting immerging lubrication. The test was performed for 4 cycles, 24 hours for each cycle, totaling 96 hours. The surface micro-hardness of lower specimen was increased from the original level of Hv_{100g} = 250 to a level of Hv_{100g} = 670 after the Falex test. The SEM image of the cross section of the lower specimen shows that the protective layer is about 0.5-1µm thick on the surface.

### Example 13:

The formulation used in Example 13 is as follows (weight parts):

| | |
|---|---|
| Actinolite (Ca₂(Mg, Fe)₅Si₈O₂₂(OH)₂) | 45 |
| HD-22 silane coupling agent | 0.5; |
| NDZ-131 mono-alkoxy fatty-acid titanate coupling agent | 0.5; |
| Nanometer Co catalyst for carbonization and graphitization | 3; |
| Nanometer Fe catalyst for carbonization and graphitization | 3. |

Actinolite particles, HD-22 silane coupling agent and NDZ-131 mono-alkoxy fatty-acid titanate coupling agent were ground together in a high-energy ball mill for 10 hours at 800rpm, until the particle-diameter was between 10nm and 1µm. Then powdery Co and Fe catalysts for carbonization and graphitization were added in and went on grinding for 30min to obtain a formulation with auto-repairing function useful in lubricants.

The obtained formulation was added in a mass ratio of 49‰ to API SD/CC SAE 15W-40 engine oil, and the surface contact friction test was conducted on a Falex Tribotester. The test specimen was of 45^{#} steel adopting immerging lubrication. The test was performed for 4 cycles, 24 hours for each cycle, totaling 96 hours. The SEM image of the cross section of the lower specimen shows that the protective layer is about 1µm thick on the surface. The surface micro-hardness of the lower specimen was increased from the original level of Hv_{100g} = 298 to a level of Hv_{100g} = 780 after the Falex test.

### Example 14:

The formulation used in Example 14 is as follows (weight parts):

| | |
|---|---|
| Serpentine (Mg₆Si₄O₁₀(OH)₈) | 50; |
| Talc (Mg₃(Si₄O₁₀)(OH)₂ | 49 ; |
| NDZ-133 mono-alkoxy fatty-acid titanate coupling agent | 1; |
| RuO₂ catalyst for carbonization and graphitization | 3; |
| RhCl₃ compound catalyst for carbonization and graphitization | 3. |

Serpentine and talc particles and NDZ-133 coupling agent were ground together in a high-energy ball mill for 10 hours at 800rpm, until the particle-diameter was between 10nm and 1µm. Then powdery RuO₂ and RhCl₃ catalyst for carbonization and graphitization were added and continuously ground for 30min to obtain a formulation with auto-repairing function useful in lubricants.

The obtained formulation was added in a mass ratio or 3.5‰ to API SD/CC SAE 15W-40 engine oil, and the surface contact friction test was conducted on a Falex Tribotester. The test specimen was of 45^{#} steel adopting immerging lubrication. The test was performed for 4 cycles, 24 hours for each cycle, totaling 96 hours. The SEM image of the cross section of the lower specimen shows that the protective layer is about 1µm thick on the surface. The surface micro-hardness of the lower specimen was increased from the original level of Hv_{100g} = 275 to a level of Hv_{100g} = 710 after the Falex test.

## Claims

1. A formulation for generating a protective layer on a metal surface, consisting of the following components in weight parts:
| | |
|---|---|
| Lamellar hydroxyl silicate powder | 45∼99; |
| Surface modifier | 1∼50; |
| Catalyst for carbonization and graphitization | 0.05∼6; |
wherein the surface modifier is a titanate coupling agent or a silane coupling agent, or a combination thereof; the catalyst for carbonization and graphitization is one of elementary elements, oxides and chlorides of the group of elements consisting of Fe, Co, Ni, Ru, Rh, Pd, Os, Ir, and Pt, or a combination thereof.

2. The formulation for generating a protective layer on a metal surface according to Claim 1, consisting of the following components in weight parts:
| | |
|---|---|
| Lamellar hydroxyl silicate powder | 60∼99; |
| Surface modifier | 3∼20; |
| Catalyst for carbonization and graphitization | 0.05∼3; |
wherein the surface modifier is a titanate coupling agent or a silane coupling agent, or a combination thereof; the catalyst for carbonization and graphitization is one of elementary elements, oxides and chlorides of the group of elements consisting of Fe, Co, Ni, Ru, Rh, Pd, Os, Ir, and Pt, or a combination thereof.

3. The formulation for generating a protective layer on a metal surface according to Claim 2, consisting of the following components in weight parts:
| | |
|---|---|
| Lamellar hydroxyl silicate powder | 75∼99; |
| Surface modifier | 7∼12; |
| Catalyst for carbonization and graphitization | 1∼2; |
wherein the surface modifier is a titanate coupling agent or a silane coupling agent, or a combination thereof; the catalyst for carbonization and graphitization is one of elementary elements, oxides and chlorides of the group of elements consisting of Fe, Co, Ni, Ru, Rh, Pd, Os, Ir, and Pt, or a combination thereof.

4. The formulation for generating a protective layer on a metal surface according to Claim 3, wherein the lamellar hydroxyl silicate powder is a powder of magnesium silicate hydroxide ore.

5. The formulation for generating a protective layer on a metal surface according to Claim 4, wherein the powder of magnesium silicate hydroxide ore is one of ore powders of serpentine, talcum, sepiolite and actinolite, or a combination thereof.

6. A method for preparing a formulation for generating a protective layer on a metal surface according to any one of claims 1 to 5, comprising the following steps:
1) Grinding a powder of natural magnesium silicate hydroxide ore with a surface modifier to form an oil-dispersible powder with particles of nanometer to micrometer grade;
2) Adding a catalyst for carbonization and graphitization and continuously grinding to form a formulation in form of uniform powder.

7. A lubricant comprising a formulation for generating a protective layer on a metal surface according to any one of claims 1 to 5.

8. A method of using a formulation for generating a protective layer on a metal surface according to any one of claims 1 to 5, comprising directly adding the formulation in a mass ratio of 0.1∼5‰ to a lubricant.

## Patentansprüche

1. Eine Formulierung zur Herstellung einer Schutzschicht auf einer Metalloberfläche, bestehend aus den folgenden Komponenten in Gewichtsteilen:
| | |
|---|---|
| Lamellares Hydroxylsilicatpulver | 45 ∼ 99; |
| Oberflächenmodifizierer | 1 ∼ 50; |
| Katalysator für die Karbonisierung und für die Graphitisierung | 0.05 ∼ 6; |
wobei der Oberflächenmodifizierer ein Titankupplungsmittel oder ein Silankupplungsmittel oder eine Kombination davon ist; der Katalysator für die Karbonisierung und für die Graphitisierung ist eines der einfachen Elemente, der Oxide und der Chloride aus der Gruppe von Elementen, bestehend aus Fe, Co, Ni, Ru, Rh, Pd, Os, Ir und Pt oder einer Kombination davon.

2. Die Formulierung zur Herstellung einer Schutzschicht auf einer Metalloberfläche gemäß Anspruch 1, bestehend aus den folgenden Komponenten in Gewichtsteilen:
| | |
|---|---|
| Lamellares Hydroxylsilicatpulver | 60 ∼ 99; |
| Oberflächenmodifizierer | 3 ∼ 20; |
| Katalysator für die Karbonisierung und für die Graphitisierung | 0.05 ∼ 3; |
wobei der Oberflächenmodifizierer ein Titankupplungsmittel oder ein Silankupplungsmittel oder eine Kombination davon ist; der Katalysator für die Karbonisierung und für die Graphitisierung ist eines der einfachen Elemente, der Oxide und der Chloride aus der Gruppe von Elementen, bestehend aus Fe, Co, Ni, Ru, Rh, Pd, Os, Ir und Pt oder einer Kombination davon.

3. Die Formulierung zur Herstellung einer Schutzschicht auf einer Metalloberfläche gemäß Anspruch 2, bestehend aus den folgenden Komponenten in Gewichtsteilen:
| | |
|---|---|
| Lamellares Hydroxylsilicatpulver | 75 ∼ 99; |
| Oberflächenmodifizierer | 7 ∼ 12; |
| Katalysator für die Karbonisierung und für die Graphitisierung | 1 ∼ 2; |
wobei der Oberflächenmodifizierer ein Titankupplungsmittel oder ein Silankupplungsmittel oder eine Kombination davon ist; der Katalysator für die Karbonisierung und für die Graphitisierung ist eines der einfachen Elemente, der Oxide und der Chloride aus der Gruppe von Elementen, bestehend aus Fe, Co, Ni, Ru, Rh, Pd, Os, Ir und Pt oder einer Kombination davon.

4. Die Formulierung zur Herstellung einer Schutzschicht auf einer Metalloberfläche gemäß Anspruch 3, wobei das lamellare Hydroxylsilicatpulver ein Pulver aus Magnesium-Silicat-Hydroxid-Erz ist.

5. Die Formulierung zur Herstellung einer Schutzschicht auf einer Metalloberfläche gemäß Anspruch 4, wobei das Pulver aus Magnesium-Silicat-Hydroxid-Erz eines der Erzpulver von Serpentin, von Talkum, von Sepiolith und von Aktinolith, oder einer Kombination davon ist.

6. Eine Methode zum Vorbereiten einer Formulierung zur Herstellung einer Schutzschicht auf einer Metalloberfläche gemäß irgendeinem der Ansprüche 1 bis 5, umfassend die folgenden Schritte:
1.) Feinmahlen eines Pulvers von natürlichem Magnesium-Silicat-Hydroxid-Erz mit einem Oberflächenmodifizierer, um ein in Öl dispergierbares Pulver mit Partikeln vom Nanometergrad bis zum Mikrometergrad zu bilden;
2.) Hinzufügen eines Katalysators für die Karbonisierung und für die Graphitisierung und kontinuierliches Feinmahlen, um eine Formulierung in Form eines einheitlichen Pulvers zu formen.

7. Ein Schmierstoff, umfassend eine Formulierung zur Herstellung einer Schutzschicht auf einer Metalloberfläche gemäß irgendeinem der Ansprüche 1 bis 5.

8. Eine Methode zum Gebrauch einer Formulierung zur Herstellung einer Schutzschicht auf einer Metalloberfläche gemäß irgendeinem der Ansprüche 1 bis 5, umfassend das direkte Hinzufügen einer Formulierung in einem Massenverhältnis von 0,1 ∼ 5‰ zu einem Schmierstoff.

## Revendications

1. Une formulation pour fabriquer une couche de protection sur une surface métallique, comportant les composants suivants en parties en poids:
| | |
|---|---|
| poudre de silicate hydroxylé lamellaire | 45∼99; |
| modifiant de surface | 1~50; |
| catalysateur pour la carbonisation et la graphitisation | 0,05~6; |
dans laquelle le modifiant de surface est un agent de couplage titanate ou silane ou une combinaison des deux; le catalysateur pour la carbonisation et la graphitisation est un des éléments simples, des oxydes ou des chlorures du groupe d'éléments comportant Fe, Co, Ni, Ru, Rh, Pd, Os, Ir et Pt, ou une combinaison de ceux-ci.

2. La formulation pour fabriquer une couche de protection sur une surface métallique selon la revendication 1, comportant les composants suivants en parties en poids:
| | |
|---|---|
| poudre de silicate hydroxylé lamellaire | 60∼99; |
| modifiant de surface | 3∼20; |
| catalysateur pour la carbonisation et la graphitisation | 0,05~3; |
dans laquelle le modifiant de surface est un agent de couplage titanate ou silane ou une combinaison des deux; le catalysateur pour la carbonisation et la graphitisation est un des éléments simples, des oxydes ou des chlorures du groupe d'éléments comportant Fe, Co, Ni, Ru, Rh, Pd, Os, Ir et Pt, ou une combinaison de ceux-ci.

3. La formulation pour fabriquer une couche de protection sur une surface métallique selon la revendication 2, comportant les composants suivants en parties en poids:
| | |
|---|---|
| poudre de silicate hydroxylé lamellaire | 75∼99; |
| modifiant de surface | 7∼12; |
| catalysateur pour la carbonisation et la graphitisation | 1~2; |
dans laquelle le modifiant de surface est un agent de couplage titanate ou silane ou une combinaison des deux; le catalysateur pour la carbonisation et la graphitisation est un des éléments simples, des oxydes ou des chlorures du groupe d'éléments comportant Fe, Co, Ni, Ru, Rh, Pd, Os, Ir et Pt, ou une combinaison de ceux-ci.

4. La formulation pour fabriquer une couche de protection sur une surface métallique selon la revendication 3, dans laquelle la poudre de silicate hydroxylé lamellaire est une poudre de minerai d'hydroxyde de silicate de magnésium.

5. La formulation pour fabriquer une couche de protection sur une surface métallique selon la revendication 4, dans laquelle la poudre de minerai d'hydroxyde de silicate de magnésium est du minerai de poudre de serpentine, de talc, de sépiolite ou d'actinote ou une combinaison de celles-ci.

6. Une méthode de préparation d'une formulation pour fabriquer une couche de protection sur une surface métallique selon l'une des revendications 1 à 5, comprenant les étapes suivantes:
1) mouture d'une poudre de minerai naturel d'hydroxyde de silicate de magnésium avec une surface modifiante pour former une poudre dispersable dans l'huile avec des particules du l'ordre du nanomètre au micromètre;
2) Addition d'un catalysateur pour la carbonisation et la graphitisation et mouture continue pour obtenir une formulation sous forme de poudre uniforme.

7. Un lubrifiant comprenant une formulation pour fabriquer une couche de protection sur une surface métallique selon l'une des revendications de 1 à 5.

8. Une méthode d'utilisation d'une formulation pour fabriquer une surface de protection sur une surface métallique selon l'une des revendications de 1 à 5, comprenant l'addition directe de la formulation au lubrifiant selon un rapport de masse de 0,1-5‰.
